# EUROPÄISCHE PATENTSCHRIFT

(11) **EP 0 768 338 B1**
(45) Veröffentlichungstag und Bekanntmachung des Hinweises auf die Patenterteilung: **02.12.1998**
(21) Anmeldenummer: 96116001.7
(22) Anmeldetag: 05.10.1996
(51) Int. Cl.: C08L 23/10

(54) **Polypropylene mit reduzierter Weissbruchneigung**
Propylene polymers with reduced tendency to stress whitening
Polymères de propylène ayant une tendance réduite à la rupture blanche

(30) Priorität: 16.10.1995 AT 1709/95
(43) Veröffentlichungstag der Anmeldung: 16.04.1997
(73) Patentinhaber: Borealis AG, 2323 Schwechat-Mannswörth (AT)
(72) Erfinder: Gahleitner, Markus, Dipl.-Ing. Dr., 4501 Neuhofen (AT); Bernreitner, Klaus, Dipl.-Ing., 4020 Linz (AT); Hafner, Norbert, Dipl.-Ing. Dr., 4020 Linz (AT); Hammerschmid, Kurt, Dipl.-Ing. Dr., 4030 Linz (AT); Heinemann, Hermann, Ing., 3331 Kematen/Ybbs (AT)
(74) Vertreter: Kunz, Ekkehard, Dr.

(56) Entgegenhaltungen:
- EP-A- 0 527 589
- EP-A- 0 564 206
- EP-A- 0 666 284
- JP-A-55 073 741
- JP-B-42 022 528

## Beschreibung

Polypropylen ist aufgrund seiner zahlreichen guten Eigenschaften in den vergangenen Jahrzehnten zu einem der verbreitetsten Kunststoffe geworden und findet in einer Vielzahl von Bereichen Anwendung. Bedingt durch das große Anwendungsspektrum werden ständig steigende Anforderungen an das Material gestellt, wodurch es zu einer ständigen Verbesserung und Erweiterung des Eigenschaftsprofils kommt. Einer der Nachteile, die Polypropylen (PP) aufweist ist das Auftreten von Weißbruch, welches sich unter Deformationsbelastung in einer unerwünschten Weißfärbung des Materials äußert. Dieser Effekt tritt bei zahlreichen PP-Typen, speziell jedoch bei mehrphasigen Systemen, wie etwa bei heterophasischen Copolymeren mit anderen α-Olefinen, insbesondere mit Ethylen, mit verbesserter Tieftemperaturzähigkeit auf und kann die technische Anwendbarkeit stark behindern, da die erwähnte Weißfärbung schon bei kleineren Schlagbelastungen wie etwa Steinschlag, Fall u. a. oder bei lokalen Dehnungen, wie etwa Knick oder Scharnierbeanspruchung auftreten kann und bei weitgehend transparenten Bautei!en zu Trübung und Lichtundurchläßigkeit sowie bei gefärbten Bauteilen zu unansehlichen weißen Flecken führt.

Zur Beseitigung bzw. Verminderung dieses Effektes sind aus der Literatur bereits verschiedene Zusätze bekannt.
So wird beispielsweise in EP-B1-0 273 228 eine Polypropylenzusammensetzung beschrieben, die ein Styrol-Ethylen/Butylen-Styrolblockcopolymeres oder ein Styrol-Ethylen/Propylenblockcopolymeres als Zusatz enthält. Aus Journal of Applied Polymer Science, Vol. 45, S. 317 - 331 (1992) ist weiters die Verwendung von Ethylen-Methacrylsäure-Copolymeren bekannt.
Der Nachteil der bisher bekannten Zusätze ist jedoch, daß sie erstens aufgrund der hohen Kosten der Zusatzstoffe zu zwangsläufig teureren Produkten führen, die zweitens keine reinen Polyolefine sind. Zudem bedingen solche Zusätze eine Veränderung und Verschlechterung der mechanischen Eigenschaften.

Aufgabe der vorliegenden Erfindung war es demnach, einen Zusatz für PP-Polymere zu finden, der die Weißbruchneigung verhindert bzw. deutlich reduziert, wobei die mechanischen Eigenschaften des Werkstoffes nicht oder nur geringfügig verschlechtert bzw. teilweise sogar verbessert werden sollten. Weiters sollte der Zusatz die Recyclierbarkeit des PP-Werkstoffes nicht verschlechtern. Unerwarteterweise konnte diese Aufgabe durch die Verwendung hochgradig amorpher und hochmolekularer Homo- oder Copolymere des Propylens als Zusatz gelöst werden.

Gegenstand der vorliegenden Erfindung sind demnach Polypropylene mit reduzierter Weißbruchneigung, die dadurch gekennzeichnet sind, daß sie
A) 70 bis 95 Gew.% eines hochgradig isotaktischen Polypropylens mit einem isotaktischen Index von über 90 und einem Schmelzflußindex zwischen 0,1 und 100 g/10 min wobei das Polypropylen ein Homopolymeres des Propylens oder ein Copolymeres des Propylens mit einem oder mehreren α-Olefinen und einem Propylenanteil von mindestens 50 Mol% sein kann und
B) 5 bis 30 Gew.% eines hochgradig amorphen Polypropylens mit einem kristallinen Polypropylen-Anteil von bis zu 10 Gew.% mit einer Schmelzenthalpie von höchstens 40 J/g und einem Schmelzflußindex zwischen 0,1 und 100 g/10 min, wobei das Polypropylen ein Homopolymeres des Propylens oder ein Copolymeres des Propylens mit einem oder mehreren α-Olefinen und mit einem Propylenanteil von mindestens 80 Mol% sein kann
enthalten.

Die erfindungsgemäßen Polypropylene mit reduzierter Weißbruchneigung bestehen aus einem hochgradig isotaktischen Polypropylen A und einem hochgradig amorphen Polypropylen B als Modifikator. Bei den Basispolymeren A handelt es sich sowohl um Polypropylen(PP)homopolymere, als auch um Polypropylen-Copolymere mit einem oder mehreren α-Olefinen.

Als PP-Homopolymere kommen alle bekannten hochgradig isotaktischen PP-Homopolymere mit einem isotaktischen Index von größer 90 in Frage.
Bevorzugt weisen die verwendeten Homopolymere einen isotaktischen Index (wie definiert in EP 255 693 bzw. Macromolecules 6 (6) 925-26 (1973)) von über 95 auf. Der Schmelzflußindex (MFI) der verwendeten Polypropylene liegt zwischen 0,1 und 100 g/10 min gemäß ISO 1133/DIN 53735, gemessen bei 230°C und 2,16 kg. Bevorzugt werden Polypropylene mit einem MFI zwischen 0,5 und 50 g/10 min eingesetzt.
PP-Copolymere sind Copolymere des Propylens mit einem oder mehreren α-Olefinen. Die als Comonomere geeigneten α-Olefine sind Olefine mit 2 bis 10 C-Atomen, wie etwa Ethylen, Buten, Hexen oder Decen. Bevorzugt wird Ethylen als Comonomeres verwendet. Der Anteil an Propylen in den entsprechenden Copolymeren liegt bei mindestens 50 Mol%, bevorzugt bei mindestens 70 Mol%. Copolymere können dabei sowohl Random-Copolymere als auch heterophasische Copolymere sein.
Der isotaktische Index der Copolymeren sollte wiederum über 90, bevorzugt über 95 betragen und der MFI zwischen 0,1 und 100 g/10 min, bevorzugt zwischen 0,5 und 50 g/10 min liegen.

Als Modifikatoren B eignen sich hochgradig amorphe Homo- oder Copolymere des Propylens. Unter hochgradig amorphen Polypropylenen sind dabei Polypropylene zu verstehen, die einen kristallinen PP-Anteil von höchstens 10 Gew.%, bevorzugt von höchstens 7 Gew.% aufweisen, mit einer Schmelzenthalpie von höchstens 40 J/g, bevorzugt höchstens 30 J/g.

Der Schmelzflußindex der hochgradig amorphen Polypropylene liegt wiederum zwischen 0,1 und 100 g/10 min, bevorzugt zwischen 0,5 und 50 g/10 min.
Der Modifikator B kann, wie oben erwähnt, ein Homopolymeres des Propylens oder ein Copolymeres des Propylens mit einem oder mehreren α-Olefinen sein. Als Comonomeres eignen sich wiederum α-Olefine mit 2 bis 10 C-Atomen, wie etwa Ethylen, Buten, Penten, Hexen oder Decen.
Bevorzugt wird Ethylen als Comonomeres eingesetzt. Der Propylenanteil der Copolymeren liegt bei mindestens 80 Mol%, bevorzugt bei mindestens 90 Mol%.

Der Modifikator B wird dabei in einer Menge von 5 bis 30 Gew.% dem zu modifizierenden Basispolymeren zugesetzt.

Die Herstellung der erfindungsgemäßen Polypropylene mit reduzierter Weißbruchneigung erfolgt beispielsweise durch einfaches Mischen des entsprechenden Basispolymeren A mit dem Modifikator B im gewünschten Gewichtsverhältnis in einem üblichen Mischer oder Kneter bei Temperaturen zwischen 190 und 300°C. Bevorzugt beträgt die Verarbeitungstemperatur 200 bis 250°C. Basispolymer A und Modifikator B können dabei in Pulver- oder Granulatform vorliegen.
Anschließend erfolgt die Weiterverarbeitung beispielsweise mittels Extrusion und Überführung in die gewünschte Endform, beispielsweise in ein Granulat, Folie, Spritzguß- bzw. Extrusionsteile.

Die erfindungsgemäßen Polypropylene zeichnen sich durch eine gegenüber dem Stand der Technik deutlich reduzierte Weißbruchneigung aus, wobei die übrigen mechanischen Eigenschaften nicht oder nur geringfügig verschlechtert bzw. teilweise sogar verbessert werden.

Weiters bleibt die Recyclierbarkeit der erfindungsgemäßen Polypropylene erhalten.

Die erfindungsgemäßen Polypropylene eignen sich demnach zur Herstellung von Folien, Spritzguß- und Extrusionsteilen nach herkömmlichen Verfahren

### Beispiele:

Es wurden Blends von verschiedenen Basispolymeren A und unterschiedlichen Modifikatoren B hergestellt. Dazu wurden die entsprechenden Pulver bzw. Granulate im gewünschten Gewichtsverhältnis gemischt, das Gemisch in einem COLLIN-Zweischneckenextruder mit 25 mm Schneckendurchmesser bei 200 bis 240°C aufgeschmolzen und anschließend mit einem Ausstoß von 4 kg/h über 2 Runddüsen zu Strängen von je 3 mm extrudiert. Die Verweilzeit im Extruder betrug etwa 20 s. Der Strang wurde nach Erstarrung im Wasserbad granuliert.

Als Ausgangsmaterialien dienten als Basispolymer A
a) Daplen KS 101, ein PP-Homopolymeres der Fa. PCD Polymere,
b) Daplen KSC 1012, ein heterophasisches EP-Copolymeres der Fa. PCD Polymere.
c) Daplen KSR 4525, ein hochschlagzähes heterophasisches EP-Copolymeres der Fa. PCD Polymere und
d) Daplen KF C 2208, ein homogenes EP-Randomcopolymeres
und als Modifikator B
a) ELPP-Homopolymer, hergestellt gemäß Beispiel 1 aus EP-A-0 632 062 und gemäß nachfolgend beschriebener Vorgangsweise degradiert.
b) ELPP-Copolymeres mit Ethylen, hergestellt gemäß Beispiel 1 aus EP-A-O 632 062, wobei in Punkt b - Polymerisation - anstelle von 7,3 kg Propen ein Gemisch aus 7,2 kg Propen und 0,09 kg Ethylen eingesetzt und eine menge von 0,09 kg/h an Ethylen während der gesamten Polymerisationsdauer nachdosiert wurde. Es wurde wiederum eine Degradierung gemäß nachfolgender Beschreibung durchgeführt.
c) als Vergleichssubstanz: REXFLEX FP-D 400, ein in Kommerzialisierung befindliches Versuchsprodukt der Fa. Rexene Corp., Odessa, TX 779760, U.S.A.

Die Degradierung der beiden ELPP-Produkte wurde wie folgt durchgeführt:

Das gemäß Beispiel 1 aus EP-A-0 632 062 erhaltene ELPP wurde auf einer Brechmühle nach Abkühlung auf unter 0°C bis zu einer Korngröße von unter 3 mm gemahlen. Anschließend wurden 0,1 (bei ELPP-Homopolymeren) bzw. 0,2 (bei ELPP-Copolymeren) Gew.% Bis((1,1-dimethylethyl)-peroxyisopropyl)benzol (Perkadox 14 Sfl, Fa. AKZO NOBEL), bezogen auf die Polymermenge, eingemischt, das Gemisch auf einem COLLIN-Zweischneckenextruder mit 25 mm Schneckendurchmesser bei 190 - 200°C aufgeschmolzen und mit einem Ausstoß von 2 kg/h über zwei Runddüsen zu Strängen von je 3 mm extrudiert. Die Verweilzeit im Extruder betrug etwa 30 sec. Der Strang wurde nach Erstarrung im Wasserbad granuliert. Es wurde das ELPP bis zu einem MFI von 6 (ELPP-Homopolymer) bzw. 12 (ELPP-Copolymer) g/10 min degradiert.
Die wesentlichen Eigenschaften, wie MFI, Schmelzenthalpie (Hm) C₂-Gehalt (C₂) und das E-Modul der eingesetzten Modifikatoren sind in Tabelle 1 zusammengefaßt.

**Tabelle 1:**

| Material | MFI (g/10 min) | Hm (DSC) (J/g) | C₂ (mol%) | E-Modul (MPa) |
|---|---|---|---|---|
| ELPP-Homopolymer | 6 | 19 | 0 | 17 |
| ELPP-Copolymer | 12 | 10 | 6 | 7 |
| REXFLEX FP-D 400 | 18 | 23 | 3,6 | 27 |

Der Schmelzindex wurde dabei gemäß ISO 1133/DIN 53735 bei 230°C/2,16 kg bestimmt. Die Kristallinität der Modifikatoren wurde mittels DSC gemäß ISO 3146 ermittelt, wobei der 2. Aufheizvorgang in einem Zyklus zwischen 10°C und 190°C mit Heiz- bzw. Kühlraten von 10 K/min ausgewertet wurde. Der C₂-Gehalt wurde mittels IR-Spektroskopie bestimmt.

Die Mechanik der Systeme wurde im Spritzguß (gemäß DIN 16774 (1988)) bei einer Massetemperatur von 250°C und Formtemperatur von 30°C hergestellten Probekörpern gemäß folgenden Verfahren bestimmt:
* Zugversuch am gespritzten Schulterstab F3/3 gemäß DIN 53455 (1981) für Reißdehnung und Reißspannung bzw. DIN 53457 (1981) für den Zug-E-Modul
* Raumtemperatur-Schlagzähigkeit bei +23°C (SZ +23°C) im Schlagzugversuch gemäß ISO 8256 (1990) am Normstab B (80 x 10 x 4 mm) mit Doppel-V-Kerbe (Methode A)
* Tieftemperatur-Schlagzähigkeit bei-20°C (SZ -20°C) im Schlagbiegeversuch gemäß ISO 179 (1eU) am ungekerbten Normstab B
* Shore-Härte (Methode D) gemäß ISO 868 (1978) am spritzgegossenen Probekörper

Die Weißbruchneigung der erfindungsgemäßen Polypropylene wurde dabei anhand der Methode gemäß F. Altendorfer u. H.P. Frank, Kunststoffe 70 (1980) S. 98 - 101 bestimmt. Dabei wurde ein Zugversuch an einem modifizierten Schulterstab F 3/3 gemäß DIN 53455/1981 mit runder Kerbung in der Mitte, zur Reduktion der Breite von 10 auf 8 mm, durchgeführt.

| Die Parameter dafür waren: | |
|---|---|
| Prüfgeschwindigkeit | 5 mm/min |
| Einspannlänge | 110 mm |
| Meßlänge | 50 mm |
| Prüftemperatur | 23°C |

Mit Hilfe des dort beschriebenen optischen Sensors wird parallel zum Kraft/Dehnungs-Diagramm ein Trübungs-/Dehnungs-Diagramm aufgezeichnet und daraus mit Hilfe einer Tangentenmethode die Dehnung bestimmt, bei der Weißbruch eintritt. Weiters wird die zugehörige Weißbrucharbeit ermittelt. Es wird dabei jeweils der Mittelwert von 5 Einzelmessungen bestimmt.

Die Ergebnisse dieser Versuche sowie die genaue Zusammensetzung der Blends sind in den Tabelle 2 bis 4 zusammengefaßt.

**Tabelle 2:**

| Type | Zugversuch E-Modul/MPa | Reißf./MPa | Reißdhg./% | Weißbruch-Dehngrenze % |
|---|---|---|---|---|
| KS 101 | 1150 | 33,5 | 778 | 3,18 |
| KS 101 + 10 % ELPP-Homo | 1110 | 19,3 | 310 | 5,68 |
| KS 101 + 25 % ELPP-Homo | 742 | 17,6 | 313 | kein WB |

| Type | MFI g/10 min | SZ + 23° kJ/m² | SZ-20°C kJ/m² | Shore D Grad |
|---|---|---|---|---|
| KS 101 | 8 | 57,0 | 16,2 | 66 |
| KS 101 + 10 % ELPP-Homo | 8 | 75,0 | 15,0 | 63 |
| KS 101 + 25 % ELPP-Homo | 7 | 109,8 | 14,0 | 61 |

**Tabelle 3:**

| Type | Zugversuch E-Modul/MPa | Reißf./MPa | Reißdhg./% | Weißbruch-Dehngrenze % |
|---|---|---|---|---|
| KFC 2208 | 668 | 29,0 | 530 | 8,62 |
| KFC 2208 + 10% ELPP-Homo | 631 | 26,2 | 633 | kein WB |
| KFC 2208 + 25% ELPP-Homo | 351 | 22,3 | 640 | 15,80 |
| KFC 2208 + 25% ELPP-Copo | 304 | 21,9 | 693 | kein WB |

| Type | MFI g/10 min | SZ + 23° kJ/m² | SZ-20°C kJ/m² | Shore D Grad |
|---|---|---|---|---|
| KFC 2208 | 8 | 123,0 | 44,0 | 58 |
| KFC 2208 + 10% ELPP-Homo | 8 | 140,8 | 35,6 | 55 |
| KFC 2208 + 25% ELPP-Homo | 8 | 183,0 | 17,9 | 51 |
| KFC 2208 + 25% ELPP-Copo | 8 | 195,0 | 24,2 | 49 |

**Tabelle 4:**

| Type | Zugversuch E-Modul/MPa | Reißf./MPa | Reißdhg./% | Weißbruch Dehngrenze/% |
|---|---|---|---|---|
| KSC 1012 | 1233 | 12,8 | 134 | 2,45 |
| KSC 1012 + 10% ELPP-Homo | 1178 | 19,9 | 230 | 3,57 |
| KSC 1012 + 25% ELPP-Homo | 776 | 18,0 | 647 | kein WB |
| KSC 1012 + 25% REFLEX | 787 | 16,3 | 526 | 12,14 |
| KSR 4525 | 960 | 7,5 | 333 | 5,09 |
| KSR 4525 + 10% ELPP-Homo | 791 | 16,5 | 558 | 6,86 |
| KSR 4525 + 25% ELPP-Homo | 521 | 18,5 | 697 | 12,14 |
| KSR 4525 + 25% REFLEX | 534 | 18,2 | 646 | 32,31 |

| Type | MFI g/10 min | SZ+23° kJ/m² | SZ-20°C kJ/m² | Shore D Grad |
|---|---|---|---|---|
| KSC 1012 | 8 | 51,3 | 75,7 | 61 |
| KSC 1012 + 10% ELPP-Homo | 8 | 71,3 | 68,5 | 59 |
| KSC 1012 + 25% ELPP-Homo | 7 | 102,0 | 54,6 | 57 |
| KSC 1012 + 25% REFLEX | 8 | 250 | 14,4 | 41 |
| KSR 4525 | 7 | 88,0 | 100,4 | 54 |
| KSR 4525 + 10% ELPP-Homo | 7 | 89,5 | 128,9 | 54 |
| KSR 4525 + 25% ELPP-Homo | 7 | 115,6 | 91,6 | 50 |
| KSR 4525 + 25% REFLEX | 9 | 104 | 108,5 | 50 |
| kein WB= gemäß der in der Beschreibung angeführten Meßmethode kein Weißbruch feststellbar | | | | |

## Patentansprüche

1. Polypropylene mit reduzierter Weißbruchneigung, dadurch gekennzeichnet, daß sie
A) 70 bis 95 Gew.% eines hochgradig isotaktischen Polypropylens mit einem isotaktischen Index von über 90 und einem Schmelzflußindex zwischen 0,1 und 100 g/10 min wobei das Polypropylen ein Homopolymeres des Propylens oder ein Copolymeres des Propylens mit einem oder mehreren α-Olefinen und einem Propylenanteil von mindestens 50 Mol% sein kann und
B) 5 bis 30 Gew.% eines hochgradig amorphen Polypropylens mit einem kristallinen Polypropylen-Anteil von bis zu 10 Gew.% mit einer Schmelzenthalpie von höchstens 40 J/g und einem Schmelzflußindex zwischen 0,1 und 100 g/10 min, wobei das Polypropylen ein Homopolymeres des Propylens oder ein Copolymeres des Propylens mit einem oder mehreren α-Olefinen und mit einem Propylenanteil von mindestens 80 Mol% sein kann
enthalten.

2. Polypropylene nach Anspruch 1, dadurch gekennzeichnet, daß als hochgradig isotaktisches Polymeres ein Homopolymeres des Propylens oder ein Copolymeres des Propylens mit einem oder mehreren α-Olefinen und einem Propylenanteil von mindestens 70 Mol% verwendet werden, wobei der isotaktische Index der Polymere über 95 und der Schmelzflußindex zwischen 0,5 und 50 g/10 min liegt.

3. Polypropylene nach Anspruch 1, dadurch gekennzeichnet, daß als Copolymeres des Propylens Random-Copolymere oder heterophasische Copolymere mit Ethylen und/oder einem α-Olefin mit 4 bis 10 C-Atomen verwendet werden.

4. Polypropylene nach Anspruch 1, dadurch gekennzeichnet, daß als Copolymere des Propylens Random- oder heterophasische Copolymere mit Ethylen verwendet werden.

5. Polypropylene nach Anspruch 1, dadurch gekennzeichnet, daß als hochgradig amorphes Polymer ein Homopolymeres des Propylens oder ein Copolymeres des Propylens mit einem oder mehreren α-Olefinen und einem Propylenanteil von mindestens 85 % verwendet werden, wobei die Polymere einen kristallinen Polypropylenanteil von höchstens 7 Gew.% mit einer Schmelzenthalpie von höchstens 30 J/g und einem Schmelzflußindex von 0,5 bis 50 g/10 min aufweisen.

6. Verwendung von Polypropylen nach Anspruch 1, zur Herstellung von Folien, Spritzguß- oder Extrusionsteilen.

## Claims

1. Polypropylenes having a reduced tendency to white fracture, characterized in that they contain
A) from 70 to 95% by weight of a highly isotactic polypropylene having an isotactic index of more than 90 and a melt flow index between 0.1 and 100 g/ 10 min, it being possible for the polypropylene to be a homopolymer of propylene or a copolymer of propylene with one or more α-olefins, having a propylene content of at least 50 mol %, and
B) from 5 to 30% by weight of a highly amorphous polypropylene having a crystalline polypropylene fraction of up to 10% by weight with an enthalpy of fusion of not more than 40 J/g and a melt flow index between 0.1 and 100 g/10 min, it being possible for the polypropylene to be a homopolymer of propylene or a copolymer of propylene with one or more α-olefins, having a propylene content of at least 80 mol %.

2. Polypropylenes according to Claim 1, characterized in that a homopolymer of propylene or a copolymer of propylene with one or more α-olefins, having a propylene content of at least 70 mol %, are used as the highly isotactic polymer, the isotactic index of the polymers being more than 95 and the melt flow index being between 0.5 and 50 g/10 min.

3. Polypropylenes according to Claim 1, characterized in that random copolymers or heterophase copolymers with ethylene and/or an α-olefin having 4 to 10 C atoms are used as the copolymer of propylene.

4. Polypropylenes according to Claim 1, characterized in that random or heterophase copolymers with ethylene are used as copolymers of propylene.

5. Polypropylenes according to Claim 1, characterized in that a homopolymer of propylene or a copolymer of propylene with one or more α-olefins, having a propylene content of at least 85%, are used as the highly amorphous polymer, the polymers having a crystalline polypropylene fraction of not more than 7% by weight with an enthalpy of fusion of not more than 30 J/g and a melt flow index of from 0.5 to 50 g/10 min.

6. Use of polypropylene according to Claim 1 for the production of films or injection moulded or extruded parts.

## Revendications

1. Polypropylènes ayant une tendance réduite à la rupture à blanc, caractérisés en ce qu'ils contiennent :
A) de 70 à 95 % en poids d'un polypropylène isotactique de qualité supérieure, ayant un indice isotactique supérieur à 90 et un indice d'écoulement à l'état fondu compris entre 0,1 et 100 g/10 min, le polypropylène pouvant être un homopolymère de propylène ou un copolymère de propylène avec une ou plusieurs α-oléfines et une proportion de propylène d'au moins 50 % en moles, et
B) de 5 à 30 % en poids d'un polypropylène amorphe de qualité supérieure ayant une proportion de polypropylène cristallin valant jusqu'à 10 % en poids, ayant une enthalpie à l'état fondu d'au plus 40 J/g et un indice d'écoulement à l'état fondu compris entre 0,1 et 100 g/10 min, le polypropylène pouvant être un homopolymère de propylène ou un copolymère de propylène avec une ou plusieurs α-oléfines et avec une proportion de propylène d'au moins 80 % en moles.

2. Polypropylènes selon la revendication 1, caractérisés en ce qu'on utilise, comme polymère isotactique de qualité supérieure, un homopolymère de propylène ou un copolymère de propylène avec une ou plusieurs α-oléfines et ayant une proportion de propylène d'au moins 70 %, l'indice isotactique des polymères étant supérieur à 95, et l'indice d'écoulement à l'état fondu étant compris entre 0,5 et 50 g/10 min.

3. Polypropylènes selon la revendication 1, caractérisés en ce qu'on utilise, comme copolymère de propylène, des copolymères aléatoires ou des copolymères à phases hétérogènes avec de l'éthylène et/ou une α-oléfine ayant de 4 à 10 atomes de carbone.

4. Polypropylènes selon la revendication 1, caractérisés en ce qu'on utilise, comme copolymère de propylène, des copolymères aléatoires ou des copolymères à phases hétérogènes avec de l'éthylène.

5. Polypropylènes selon la revendication 1, caractérisés en ce qu'on utilise, comme polymère amorphe de qualité supérieure, un homopolymère de propylène ou un copolymère de propylène avec une ou plusieurs α-oléfines et ayant une proportion en propylène d'au moins 85 %, les polymères présentant une proportion de polypropylène cristallin d'au plus 7 % en poids avec une enthalpie à l'état fondu d'au plus 30 J/g et un indice d'écoulement à l'état fondu de 0,5 à 50 g/10 min.

6. Utilisation de polypropylène selon la revendication 1 pour la fabrication de feuilles et d'éléments coulés par injection ou extrudés.
